# EUROPÄISCHE PATENTSCHRIFT

(11) **EP 1 224 437 B1**
(45) Veröffentlichungstag und Bekanntmachung des Hinweises auf die Patenterteilung: **10.09.2008**
(21) Anmeldenummer: 01915088.7
(22) Anmeldetag: 07.03.2001
(51) Int. Cl.: G01F 1/684, G01F 15/12

(54) **SCHUTZGITTER FÜR MASSENDURCHFLUSSSENSOR IN EINEM ANSAUGLUFTKANAL**
PROTECTIVE GRATING FOR A MASS FLOW RATE SENSOR IN A CHANNEL OF SUCTIONED AIR
GRILLE DE PROTECTION POUR CAPTEUR DE DEBIT MASSIQUE SITUE DANS UNE CONDUITE D'ASPIRATION D'AIR

(30) Priorität: 10.03.2000 DE 10011709
(43) Veröffentlichungstag der Anmeldung: 24.07.2002
(73) Patentinhaber: ROBERT BOSCH GMBH, 70442 Stuttgart (DE)
(72) Erfinder: ROECKEL, Herbert, 71254 Ditzingen (DE); RILLING, Heinz, 71735 Eberdingen (DE); LENZING, Thomas, 71726 Benningen (DE); KREBS, Holger, 71729 Erdmannshausen (DE); KONZELMANN, Uwe, 71679 Asperg (DE)
(86) Internationale Anmeldenummer: PCT/DE2001/000855
(87) Internationale Veröffentlichungsnummer: WO 2001/067049

(56) Entgegenhaltungen:
- WO-A-01/18497
- DE-A- 19 637 647
- DE-A- 19 942 501
- DE-A- 19 942 502
- US-A- 4 433 576
- PATENT ABSTRACTS OF JAPAN vol. 2000, no. 14, 5. März 2001 (2001-03-05) & JP 2000 304585 A (HITACHI LTD;HITACHI CAR ENG CO LTD), 2. November 2000 (2000-11-02)

## Beschreibung

### Stand der Technik

Die Erfindung geht aus von einer Vorrichtung zur Messung von zumindest einem Parameter eines in einer Leitung strömenden Mediums nach der Gattung des Anspruchs 1.

Aus der DE 197 35 891 A1 ist ein in einen Reinkanal einer Ansaugleitung einer Brennkraftmaschine einsetzbarer Messkörper
zur Bestimmung der Masse der Ansaugluft bekannt, der einen Strömungs- und Messkanal aufweist, der im wesentlichen zu einer Längsachse einer Leitung geneigt ist und sich in einen daran anschliessenden, S-förmigen Umlenkkanal gliedert. Ein Messelement ist in dem Messkanal angeordnet. Das Messelement kann, wie beispielsweise durch die DE 43 38 891 A1 bzw. US-PS 5,452,610 bekannt ist, als mikromechanisches Sensorteil mit einer dielektrischen Membran ausgebildet sein. Infolge Wassereintrag in die Ansaugleitung, z.B. durch regennasse Fahrbahn, kann es ggf. zu einer Kontamination des Messelements kommen. In diesem Spritzwasser enthaltene natürliche Anteile an gelösten Salzen rufen dann einen Kennliniendrift infolge Salzkrustenaufbau auf der Membran des Sensorteils hervor. Durch die Neigung des Messkörpers wird zwar ein abgeschatteter
Bereich gebildet, aber Schmutz- oder Flüssigkeitspartikel gelangen trotzdem in den Messkanal.

Aus der DE 197 35 664 A1 ist schon eine Vorrichtung bekannt, bei
der das Messelement innerhalb eines von dem Medium durchströmten
Rohrkörpers angeordnet ist, wobei sich ein strömungsaufwärtiges
Ende des Rohrkörpers bis in eine Filterkammer erstreckt und dort
an einer Mantelfläche Einlassöffnungen aufweist, um eine Beaufschlagung des Messelementes durch Schmutzpartikel oder Wassertröpfchen zu vermindern. Besonders bei stark verschmutzter
Luft und einem hohen Wasseranteil in der Ansaugluft der Brennkraftmaschine besteht die Gefahr, dass sich der Luftfilter
mit Wasser vollsaugt, das dann durch die Filtermatte hindurchtritt und dabei Schmutzpartikel mitnimmt. Auf der strömungsabwärtigen Seite des Luftfilters, der eigentlichen Reinseite, besteht nun die Gefahr, dass die Ansaugluft wieder von der Filteroberfläche Schmutzpartikel und Wassertröpfchen
mitreisst, die dann in unerwünschter Weise an dem Messelement angelagert werden und zu Fehlmessungen oder einem Ausfall des
Messelementes führen. Der Rohrkörper nach dem Stand der Technik
vermindert durch die Anordnung der Einlassöffnungen an der Mantelfläche die Gefahr von Ablagerungen am Messelement, jedoch
wird durch eine entsprechend lange Ausbildung des Rohrkörpers
ein unerwünschter Druckabfall bewirkt, der zu einer Verminderung
der Messempfindlichkeit führt. Ausserdem ist die Verringerung
einer Beaufschlagung des Messelements mit Flüssigkeit/Festkörperpartikeln zu gering bei einem im Betrieb eines Kraftfahrzeuges sich ergebenden Flüssigkeitseintrag von 20 Liter/Stunde.

Aus der DE 196 52 753 A1 ist eine Vorrichtung mit einem Messelement bekannt, die einen Strömungsgleichrichter und ein
Gitter zu einer Stabilisierung eines Messsignals enthält.
Jedoch
wird kein weiteres Gitter oder Element verwendet, um das Messelement vor Flüssigkeiten oder Festkörperpartikeln zu schützen.

Es ist weiterhin vorgeschlagen worden, ein Abweisgitter in einer
Leitung zu verwenden, um aus strömender Luft oder einem Gas Flüssigkeitspartikel zu trennen. Ein solches vor einem Innenrohr oder in der Leitung geschaltetes Abweisgitter beeinflusst das dem Messelement zuströmende Luft/Wassergemisch derart, dass die
Flüssigkeitspartikel an eine Rohrwand bzw. eine Leitungswand
geleitet werden, während die Luft in einem Zentrum des Innenrohres verbleibt.

Ein anderes Verhalten zeigt sich bei dem Durchsatz eines Gemisches mit Luft und Staub in der Leitung. Der Staub ändert
auf Grund seiner noch höheren Trägheit gegenüber einer Flüssigkeit bei einem durch die angestellten Seitenwände erzwungenen Strömungsrichtungswechsel seinen Weg nur durch Reflexion an der Seitenwand, wobei das Prinzip Einfallswinkel gleich Ausfallswinkel gilt. Hierdurch ergibt sich je nach Orientierung der Seitenwand und Auftreffpunkt eine bestimmte Partikelabweisung, d.h. ein bestimmter Anteil der auf das Abweisgitter treffenden Partikel wird durch eine Reflexion in Richtung Wand abgelenkt. Der übrige Teil weist nach zwei Reflexionen an den Seitenwänden erneut die Hauptströmungsrichtung auf und kann so ungehindert auf das dem Abweisgitter nachgeschaltete Messelement treffen.

Aus der US 4 433 576 ist eine Vorrichtung zur Bestimmung zumindest eines Parameters eines in einer Leitung strömenden Mediums bekannt mit einem in der Leitung angeordneten und vom strömenden Medium umströmten Messelement. Strömungsaufwärts des Messelementes ist in der Leitung ein Strömungsgleichrichter angeordnet, der geradlinige Kanäle aufweist, welche das strömende Medium aus der Strömungsrichtung vor dem Strömungsgleichrichter in eine Richtung lenkt, die direkt auf das Messelement gerichtet ist.

Aus der DE 196 37 647 A1 ist eine Vorrichtung zur Messung der Masse eines strömenden Mediums bekannt, welche einen stromaufwärts des Messelementes angeordneten Strömungsgleichrichter in Kombination mit einem Gitter aufweist. Das Gitter ist an einem Trägerring angebracht, der in Strömungsrichtung hinter dem Gleichrichter in eine Öffnung einer Leitung eingesetzt ist. Stromabwärts von dem Gitter ist ein Steckfühler mit dem Messelement in der Leitung angeordnet.

### Vorteile der Erfindung

Die erfindungsgemässe Vorrichtung mit den kennzeichnenden Merkmalen des Anspruches 1 hat dem gegenüber den Vorteil, dass
auf einfache Art und Weise eine Verbesserung der Ablenkung von
Festkörperpartikeln sowie Flüssigkeitspartikeln erzielt wird,
indem die Orientierung der Seitenwände zur Hauptströmungsrichtung über ihre Erstreckung in der Hauptströmungsrichtung variiert wird.

Durch die in den abhängigen Ansprüchen aufgeführten Massnahmen
sind vorteilhafte Weiterbildungen und Verbesserungen der im Anspruch 1 genannten Vorrichtung möglich.

Es ist vorteilhaft, die Bewegungsbahn der Festkörperpartikel des
strömenden Mediums durch die Gestaltung der Seitenwände so zu
beeinflussen, dass diese an dem Messelement vorbeiführt, da dadurch das Messelement nicht verschmutzt wird.

Die Möglichkeit positiver oder negativer Schnittwinkel der Seitenwände mit der Strömungsrichtung haben den Vorteil, das dies bei der Konstruktion mehrere Variationen zulässt.

Die stetige Krümmung eines Kanals hat den Vorteil, dass die Gefahr einer sich eventuell einstellenden Ablösung der Strömung reduziert wird, wodurch ansonsten ein erhöhtes Signalrauschen verursacht wird.

Eine besonders vorteilhafte Gestaltung des Kanals ist in Unteranspruch 7 gegeben.

Die Verwendung eines Rohrkörpers in der Leitung der Vorrichtung
hat den Vorteil, dass ein zusätzlicher Schutz für das Messelement erzielt wird.

### Zeichnung

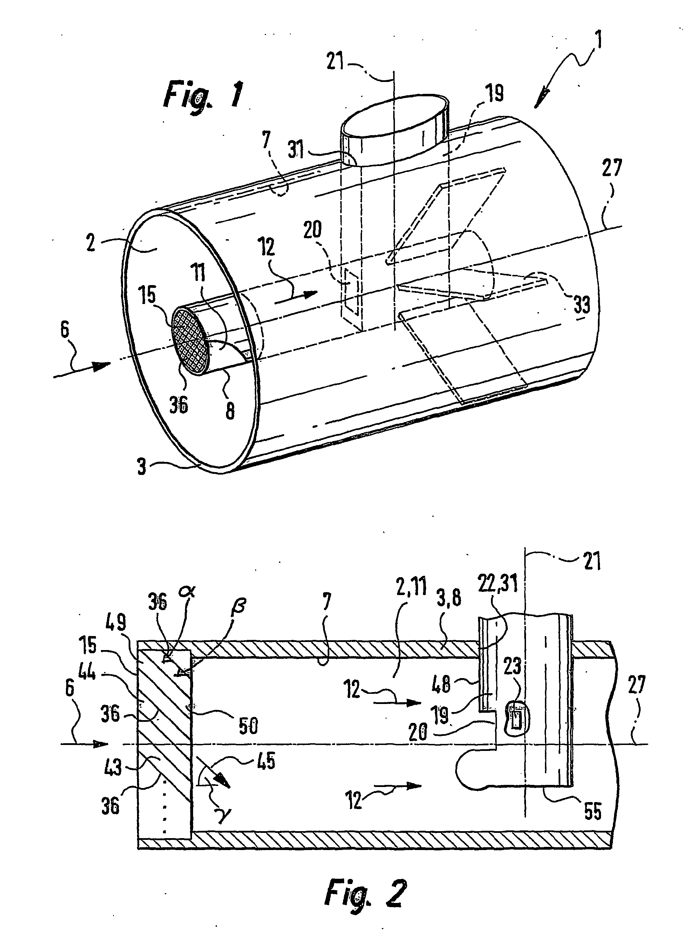

Ausführungsbeispiele der Erfindung sind in der Zeichnung vereinfacht dargestellt und in der nachfolgenden Beschreibung
näher erläutert.
Es zeigen Figur 1 ein Beispiel einer erfindungsgemässen Vorrichtung in einem Rohrstutzen,
Figur 2 einen axialen Querschnitt in Längsrichtung in Figur 1,
Figur 3 einen Gleichstromkanal nach dem Stand der Technik, Figur 4a und b einen axialen Querschnitt durch einen erfindungsgemäss ausgestalteten Gleichstromkanal, Figur 5a und b weitere Ausführungsbeispiele der erfindundsgemässen Vorrichtung in Teildarstellung.

### Beschreibung der Ausführungsbeispiele

Figur 1 zeigt eine Vorrichtung 1 zur Messung von zumindest einem
Parameter, insbesondere eines Luftvolumenstroms, eines in einer
Leitung 2 strömenden Mediums, insbesondere des Ansaugluftvolumens einer Brennkraftmaschine.

Parameter eines strömenden Mediums sind bspw. der Luftvolumenstrom zur Ermittlung einer Luftmasse, eine Temperatur, ein Druck oder eine Strömungsgeschwindigkeit, die mittels geeigneter Sensoren bestimmt werden. Die Anwendung
der Vorrichtung 1 für Messungen weiterer Parameter ist möglich.
Dies kann dadurch erfolgen, dass zwei oder mehr Sensoren verwendet werden, wobei ein Sensor auch zwei oder mehr Parameter
ermitteln kann.
Die Leitung 2 hat eine Wandung 3. In der Leitung 2 strömt das
Medium in der Hauptströmungsrichtung 6, gekennzeichnet durch einen Pfeil. Die Leitung 2 hat eine Innenwandung 7. In der Leitung 2 ist bspw. ein mit radialem Abstand zur Leitung 2 verlaufender und von dem Medium umströmter Rohrkörper 8 vorhanden. Der Rohrkörper 8 hat einen Durchströmungskanal 11 und
im Bereich seines strömungsaufwärtigen Ende gelegen ein Schutzgitter 15. Als Material für das Schutzgitter 15 kann Kunststoff, Metall, Keramik oder Glas verwendet werden. Das plattenförmige Schutzgitter 15 aus Kunststoff kann beispielsweise durch Spritzgiessen hergestellt werden oder durch
Einbringen der Gitteröffnungen 44 mittels eines materialabtragenden Verfahrens. In dem Durchströmungskanal 11
herrscht strömungsabwärts etwas entfernt von dem Schutzgitter 15
eine Strömungsrichtung 12. Die Strömungsrichtung 12 verläuft in
etwa parallel zur Hauptströmungsrichtung 6. Die Leitung 2 hat
eine Mittellinie 27, die bspw. auch die Mittellinie des Rohrkörpers 8 ist.

In den Rohrkörper 8 erstreckt sich bspw. ein Messkörper 19. Der Messkörper 19 ist teilweise durch eine Einstecköffnung 31 in der Wandung 3 und eine Einstecköffnung 22 in einer Wandung des Rohrkörpers 8 bspw. eingesteckt und ragt mit einem freien Ende in den Durchströmkanal 11.
Dem Fachmann ist ein solcher Messkörper 19 aus der DE 197 35 891 A1 bekannt, die Teil dieser Offenbarung sein soll. Das von der Brennkraftmaschine angesaugte Luftvolumen ist durch
eine nicht dargestellte, strömungsabwärts des Rohrkörpers 8 in
dem Ansaugrohr der Brennkraftmaschine angeordnete Drosselklappe
willkürlich veränderbar.

Zur Ermittlung der Ansaugluftmasse der Brennkraftmaschine ist
der Messkörper 19 vorgesehen, der im wesentlichen länglich und
quaderförmig ausgebildet ist und sich entlang einer Längsachse
21 erstreckt. Die Längsachse 21 verläuft im wesentlichen senkrecht zur Mittellinie 27 und damit auch zur Hauptströmungsrichtung 6.
Ein die elektrischen Anschlüsse, beispielsweise in Form von Steckerzungen, aufnehmendes Steckerende des Messkörpers 19 verbleibt dabei bspw. ausserhalb der Leitung 2. Im Messkörper 19 ist in bekannter Weise ein Messelement 23 vorgesehen, das mit der den Durchströmkanal 11 durchströmenden Luft in Kontakt steht und mittels dem der von der Brennkraftmaschine angesaugte Luftvolumenstrom bestimmt wird.
Das Messelement 23 kann bspw. ein Temperatursensor, wie er aus der DE 42 28 484 C2 bekannt ist, ein Drucksensor, wie er in der DE 31 35 794 A1 verwendet wird, oder ein Luftvolumensensor sein, der die entsprechenden Parameter ermittelt. Als Beispiel für die
verschiedenen Sensoren wird hier exemplarisch ein Luftvolumensensor gewählt, der bspw. in dem Messkörper 19 angeordnet ist, der bspw. eine Einlassöffnung 20 hat, in die das Medium einströmt.
Das Messelement 23 kann in bekannter Weise z.B. in Form von wenigstens einem temperaturabhängigen Widerstand ausgebildet sein. Insbesondere ist es möglich, wie beispielsweise in der DE 43 38 891 A1 bzw. US-PS 5,452,610 gezeigt wird, das Messelement
23 als mikromechanisches Bauteil auszubilden, welches eine dielektrische Membran aufweist, auf welcher Widerstandselemente
ausgebildet sind. Es ist auch denkbar, das Messelement 23 ohne
Messkörpers 19 in die Leitung 2 oder den Rohrkörper 8 einzubringen.
An dem Rohrkörper 8 befinden sich bspw. wenigstens zwei Streben
33, die zur Halterung des Rohrkörpers 8 in der Leitung 2 dienen.

Die Streben 33 bewirken ausser der Halterung des Rohrkörpers 8 in der Luftströmung zwischen der Leitung 2 und dem Rohrkörper 8
eine Erhöhung des Druckabfalls, so dass sich die durch den Durchströmkanal 11 strömende Luftmenge erhöht, und zum anderen
bewirken die Streben 33 in gewollter Weise eine Gleichrichtung
der Ansaugluftströmung. Der Rohrkörper 8 kann auch ohne Streben
33 in der Leitung 2 angeordnet sein, bspw. ist er an dem Messkörper 19 befestigt.

Ein Aufbau des Schutzgitters 15 wird in den nachfolgenden Figuren 2,4 und 5 näher erläutert. Hierzu nur kurz.

An dem Schutzgitter 15 lagern sich Flüssigkeitströpfchen ab und werden an eine Innenwand 7 der Leitung 2 oder des Rohrkörpers 8 geleitet und bewegen sich dadurch an der Einlassöffnung 20 des Messkörpers 19 oder an dem Messelement 23
vorbei.

Weiter strömungsabwärts des Schutzgitters 15 herrscht eine Strömungsrichtung 12 in dem Durchströmkanal 11, die nahezu parallel zur Mittellinie des Rohrkörpers 8 ist.

Figur 2 zeigt einen axialen Querschnitt in Längsrichtung in Figur 1. Für gleiche oder gleichwirkende Teile werden die gleichen Bezugszeichen wie in Figur 1 verwendet.
Zu erkennen ist das Schutzgitter 15 mit Seitenwänden 36, die um einen bestimmten Umlenkwinkel zur Mittellinie 27 geneigt verlaufen. Die Seitenwände 36 sind bspw. parallel zur Steckachse 21 und senkrecht zur Steckachse 21 oder stehen senkrecht aufeinander und sind in beliebig Orientierung um Mittellinie 27 angeordnet, wobei sich die
Die Seitenwände 36 bilden Kanalöffnungen 44, die zumindest quer zur Strömungsrichtung 6,12 dreieckig sind, bzw. rund oder oval oder wie in diesem Ausführungsbeispiel viereckig sind.
Das Medium strömt durch die Kanalöffnungen 44 ein und verlässt das Schutzgitter 15 strömungsabwärts gesehen hinter dem Schutzgitter 15 umgelenkt in einer anderen Richtung 45, gekennzeichnet durch einen Pfeil.
Es kann bspw. auch kein Rohrkörper 8 vorhanden sein, so dass sich das Schutzgitter 15 bspw. über den ganzen Querschnitt der
Leitung 2 erstreckt.
Der Messkörper 19 hat eine Vorderfläche 48, die zuerst von dem
Medium angeströmt und umströmt wird. Eine Unterfläche 55 wird
durch das freie radiale Ende des Messkörpers 19 gebildet.

Ein durch zwei Seitenwänden 36 gebildeter Kanal 43 hat bspw. einen ersten Abschnitt 49 in dem die Seitenwand 36 mit der Strömungsrichtung 12 einen Schnittwinkel α bildet. In einem zweiten Abschnitt 50 bildet die Seitenwand 36 des Kanals 43 einen Schnittwinkel β mit der Strömungsrichtung 12, der grösser als der Schnittwinkel α ist.

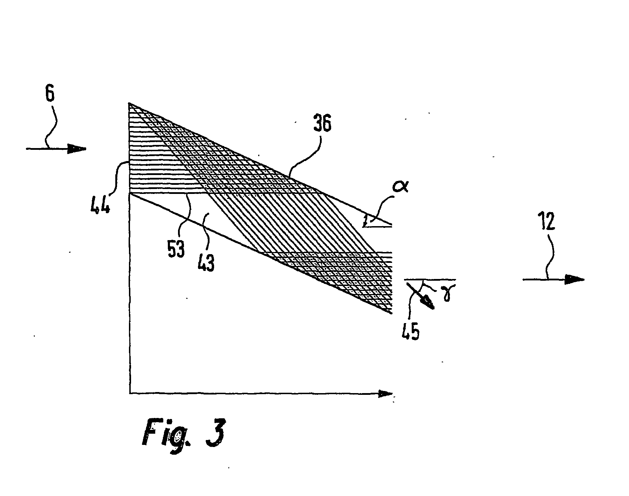

Figur 3 zeigt einen Kanal 43 eines Schutzgitters 15 nach dem Stand der Technik. In Hauptströmungsrichtung 6 strömt das Medium in die Kanalöffnung 44 des Kanals 43. Über den Querschnitt der
Kanalöffnung 44 sind gleichmässig verteilt zwanzig Linien 53,
die Bewegungsbahnen je eines Partikels im Kanal 43 aufzeigen.
Ein Teil der Partikel wird an nur einer Seitenwand 36 einmal reflektiert und verlässt danach den Kanal 43 strömungsabwärtig in einer Richtung 45 wieder. Die Richtung 45 verläuft unter
einem Winkel δ zur Strömungsrichtung 12. Der Winkel δ ist verschieden von null. Ein bestimmter Anteil der Linien 53 zeigt Bewegungsbahnen in dem Kanal 43 mit zweifacher Reflexion, je einer Reflexion an jeder der Seitenwand 36, so dass diese Teilchen eine Kanalaustrittsöffnung strömungsabwärtig etwa parallel zur Strömungsrichtung 12 wieder verlassen und so ungehindert auf das strömungsabwärtig
vorhandene Messelement 23 treffen können.

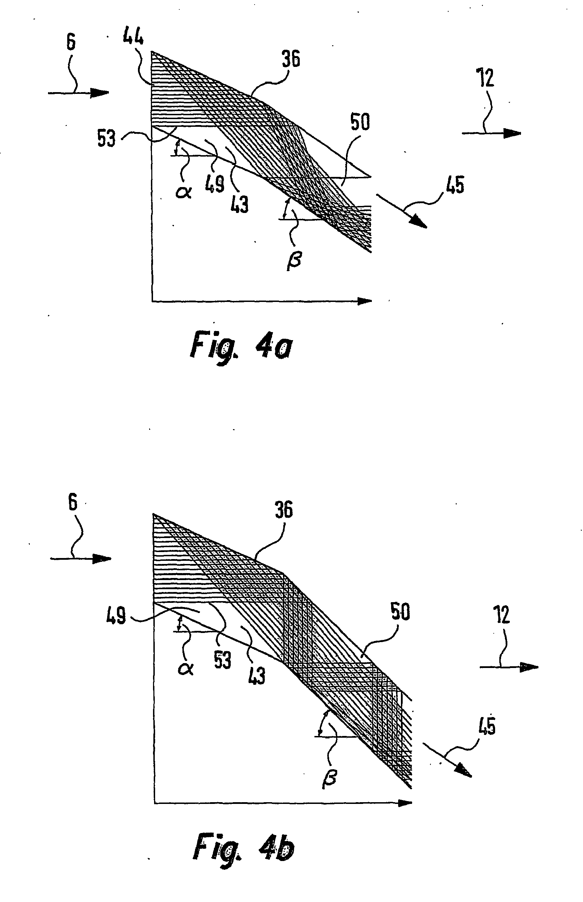

In den Figuren 4a und b sind zwei Beispiele der erfindungsgemässen Ausgestaltung des Schutzgitters 15 der Vorrichtung 1 gezeigt. Figur 4a zeigt einen Kanal 43 des Schutzgitters 15 der bspw. einen ersten Abschnitt 49 und strömungsabwärts einen zweiten Abschnitt 50 hat. Die den ersten Abschnitt 49 begrenzenden Seitenwandabschnitte bilden mit der Strömungsrichtung 12 einen Schnittwinkel α der hier bspw. 25°C beträgt. Die den zweiten Abschnitt 50 begrenzenden Seitenwandabschnitte bilden mit der Strömungsrichtung 12 einen Schnittwinkel β, der bspw. 35°C beträgt. Die Anzahl der Bewegungsbahnen einzelner darstellender Linien 53, die beim Austritt aus dem Kanal 43 abströmwärtig den Kanal 43 parallel zur Strömungsrichtung 6, 12 verlaufen, hat sich gegenüber dem Stand der Technik, gemäss in Figur 3, reduziert.
Eine Verbesserung des Schutzes des Messelements 23 vor auftreffenden Partikeln ist dadurch gewährleistet.

Figur 4b zeigt ein Ausführungsbeispiel des Kanals 43 mit einem
Schnittwinkel β, der in diesem Fall 45° beträgt.
Die Schnittwinkel können positiv und negativ sein, d.h. alle können negativ sein oder nur ein Teil von Ihnen.

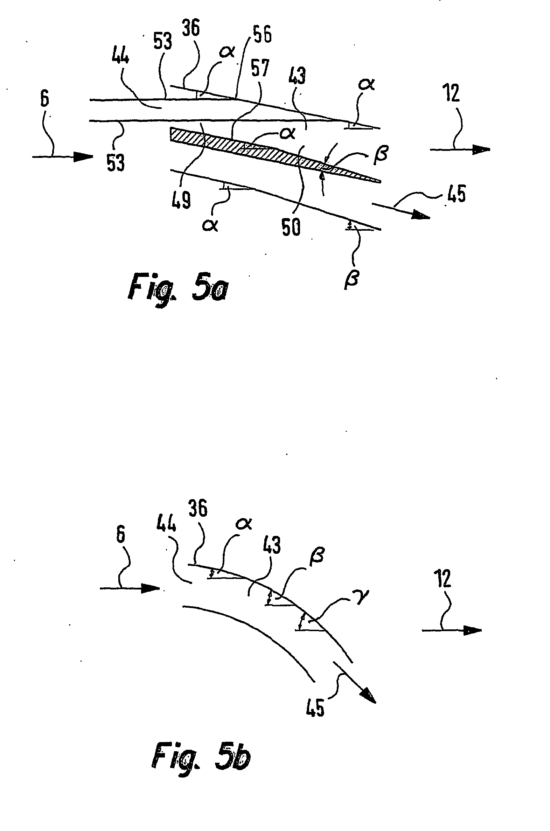

Figur 5a und b zeigen weitere Ausführungsbeispiele des Kanals
43. In Figur 5a ist ein Kanal 43 gezeigt, dessen obere Seitenwand 56 mit der Strömungsrichtung 12 in allen Abschnitten einen gleichen Schnittwinkel bildet. Die der oberen Seitenwand 56 gegenüberliegende untere Seitenwand 57 hat bspw. zwei Abschnitte. Der erste Abschnitt 49 bildet mit der Strömungsrichtung 12 einen Schnittwinkel α und der zweite Abschnitt einen vom Schnittwinkel α abweichenden Schnittwinkel β mit der Strömungsrichtung 12. Der Unterschied zu der Kanalausbildung gemäss Figur 4a besteht darin, dass die Linien 53, die im Bereich der oberen Seitenwand 56 im zweiten Abschnitt 50 reflektiert werden, mit einem gleichen Schnittwinkel α reflektiert werden.

In Figur 5b ist ein Kanal 43 gezeigt, dessen Seitenwand 36 stetig gekrümmt ist, so dass an jeder Stelle der Seitenwand ein verschiedener Schnittwinkel α, β, γ mit der Strömungsrichtung 12 gebildet wird, so dass die Gefahr einer sich eventuell einstellenden Ablösung der Strömung reduziert wird.

## Patentansprüche

1. Vorrichtung (1) zur Bestimmung zumindest eines Parameters, insbesondere eines Volumenstromes, eines in einer Leitung (2) strömenden Mediums in Form eines Gas-Flüssigkeits-Festkörperpartikelgemischs, insbesondere der Ansaugluft einer Brennkraftmaschine, mit einem in der Leitung (2) angeordneten und vom strömenden Medium umströmten Messelement (23),
**dadurch gekennzeichnet, dass** die Vorrichtung (1) zumindest ein zumindest teilweise strömungsaufwärts des Messelementes (23) innerhalb der Leitung (2) angeordnetes Schutzgitter (15) hat, das zumindest einen Kanal (43) hat, der das in einer Hauptströmungsrichtung (6) strömende Medium strömungsabwärts hinter dem Schutzgitter (15) zumindest teilweise in eine Richtung umlenkt, die nicht auf das Messelement (23) trifft,
und dass der zumindest eine Kanal (43) zumindest eine Seitenwand (36) mit zumindest zwei Abschnitten (49, 50) hat, die zumindest einen voneinander verschiedenen Schnittwinkel (α,β) mit der Strömungsrichtung (6, 12) bilden, so dass die Bewegungsbahn der Festkörperpartikel des Gas-Flüssigkeits-Festkörperpartikelgemischs derart beeinflusst wird, dass die Festkörperpartikel an dem Messelement vorbeigeführt werden.

2. Vorrichtung nach Anspruch 1,
**dadurch gekennzeichnet, dass**
die Bewegungsbahn (53) der Festköperpartikel des strömenden Mediums durch zumindest einmalige Reflektion an der Seitenwand (36) nach dem Austritt aus dem Kanal (43) in Strömungsrichtung (6, 12) gesehen hinter dem Schutzgitter (15) so verläuft, dass sie einen Winkel (γ) mit der Strömungsrichtung (6, 12) bildet und die,Festkörperpartikel an dem weiter strömungsabwärts gelegenen Messelement (23) vorbeigeführt werden.

3. Vorrichtung nach Anspruch 1,
**dadurch gekennzeichnet, dass**
die Schnittwinkel (α, β) positiv oder negativ sind.

4. Vorrichtung nach einem oder beiden der Ansprüche 1 oder 2,
**dadurch gekennzeichnet, dass**
der zumindest eine Kanal (43) des Schutzgitters (15) in Strömungsrichtung (6, 12) stetig gekrümmt ist.

5. Vorrichtung nach einem oder mehrerem der vorherigen Ansprüche 1, 2 oder 4,
**dadurch gekennzeichnet,**
**dass** der zumindest eine Kanal (43) eine Kanalöffnung (44) hat, durch die das Medium in den Kanal (43) gelangt, und dass ein Querschnitt der Kanalöffnung (44) quer zur Strömungsrichtung (6,12) zumindest dreieckig ist.

6. Vorrichtung nach einem oder mehrerem der vorherigen Ansprüche 1, 2, 4 oder 5,
**dadurch gekennzeichnet, dass**
ein Querschnitt der Kanalöffnung (44) quer zur Strömungsrichtung (6,12) rund oder oval ist.

7. Vorrichtung nach Anspruch 1,
**dadurch gekennzeichnet,**
**dass** der Kanal (43) zwei Abschnitte (49,50) hat, dass der erste Abschnitt (49) einen Schnittwinkel von etwa 25° und der zweite Abschnitt (50) einen Schnittwinkel von etwa 35° mit der Hauptströmungsrichtung (6,12) bildet.

8. Vorrichtung nach einem oder mehrerem der vorherigen Ansprüche,
**dadurch gekennzeichnet,**
**dass** sich in der Leitung (2) ein von dem Medium in Hauptströmungsrichtung (6) durchströmten Rohrkörper (8) erstreckt, der einen Durchströmkanal (11) hat, und dass das Messelement (23) sich in dem Rohrkörper (8) befindet.

## Claims

1. Device (1) for determining at least one parameter, in particular a volume flow, of a medium flowing in a line (2) in the form of a gas/liquid/solid-particle mixture, in particular the intake air of an internal combustion engine, with a measuring element (23) which is arranged in the line (2) and around which the flowing medium flows, **characterized in that** the device (1) has at least one protective grid (15) which is arranged at least partially upstream of the measuring element (23), within the line (2), and has at least one duct (43) which, downstream of the protective grid (15), at least partially deflects the medium flowing in a main flow direction (6) into a direction which does not impinge upon the measuring element (23), and **in that** the at least one duct (43) has at least one side wall (36) with at least two portions (49, 50) which form at least one mutually different intersection angle (α, β) with the flow direction (6, 12), so that the path of movement of the solid particles of the gas/liquid/solid-particle mixture is influenced in such a way that the solid particles are routed past the measuring element.

2. Device according to Claim 1, **characterized in that** the path of movement (53) of the solid particles of the flowing medium, after emergence from the duct (43), runs, downstream of the protective grid (15), as seen in the flow direction (6, 12), due to at least single reflection on the side wall (36), such that the said path of movement forms an angle (γ) with the flow direction (6, 12) and the solid particles are routed past the measuring element (23) located further downstream.

3. Device according to Claim 1, **characterized in that** the intersection angles (α, β) are positive or negative.

4. Device according to one or both of Claims 1 and 2, **characterized in that** the at least one duct (43) of the protective grid (15) is curved continuously in the flow direction (6, 12).

5. Device according to one or more of the preceding Claims 1, 2 or 4, **characterized in that** the at least one duct (43) has a duct orifice (44), through which the medium passes into the duct (43), and **in that** a cross section of the duct orifice (44) transverse to the flow direction (6, 12) is at least triangular.

6. Device according to one or more of the preceding Claims 1, 2, 4 or 5, **characterized in that** a cross section of the duct orifice (44) transverse to the flow direction (6, 12) is round or oval.

7. Device according to Claim 1, **characterized in that** the duct (43) has two portions (49, 50), and **in that** the first portion (49) forms an intersection angle of about 25° and the second portion (50) an intersection angle of about 35° with the main flow direction (6, 12).

8. Device according to one or more of the preceding claims, **characterized in that** a tubular body (8), through which the medium flows in the main flow direction (6) and which has a throughflow duct (11), extends in the line (2), and **in that** the measuring element (3) is located in the tubular body (8).

## Revendications

1. Dispositif (1) pour déterminer au moins un paramètre notamment un débit volumique d'un milieu traversant une conduite (2) sous la forme d'un mélange de gaz-liquide-particules de corps solides notamment de l'air aspiré par un moteur à combustion interne, comportant un élément de mesure (23) installé dans la conduite (2) et balayé par le milieu qui s'écoule,
**caractérisé en ce que**
le dispositif (1) comporte au moins une grille protectrice (15) installée dans la conduite (2) au moins partiellement en amont de l'élément de mesure (23),
ce dispositif comportant au moins un canal (43) qui assure la déviation au moins partielle, du milieu s'écoulant dans la direction principale d'écoulement (6), en aval de la grille protectrice (15), au moins partiellement dans une direction non dirigée sur l'élément de mesure (23), et
au moins le canal (43) a au moins une paroi latérale (36) ayant au moins deux segments (49, 50) qui forment avec la direction d'écoulement (6, 12) au moins l'un des angles d'intersection (α, β) différents, de façon que la trajectoire des particules de corps solides du mélange gaz-liquide-particules de corps solides soit influencée pour que les particules de corps solides passent à côté de l'élément de mesure.

2. Dispositif selon la revendication 1,
**caractérisé en ce que**
la trajectoire (53) des particules de corps solides du milieu qui s'écoule est dirigée par au moins une réflexion contre la paroi latérale (36) après la sortie du canal (43) dans la direction d'écoulement (6, 12) en aval de la grille protectrice (15) de façon à former un angle (γ) avec la direction d'écoulement (6, 12), et que les particules de corps solides soient déviées par rapport à l'élément de mesure (23) situé plus loin en aval.

3. Dispositif selon la revendication 1,
**caractérisé en ce que**
les angles d'intersection (α, β) sont positifs ou négatifs.

4. Dispositif selon la revendication ou les deux revendications 1 ou 2,
**caractérisé en ce qu'**
au moins un canal (43) de la grille de protection (15) est courbé de manière continue dans la direction d'écoulement (6, 12).

5. Dispositif selon les revendications 1, 2 ou 4,
**caractérisé en ce qu'**
au moins le canal (43) comporte une ouverture de canal (44) à travers laquelle le milieu arrive dans le canal (43), et la section de l'ouverture (44) du canal, transversale à la direction d'écoulement (6, 12), est au moins triangulaire.

6. Dispositif selon les revendications précédentes 1, 2, 4 ou 5,
**caractérisé en ce qu'**
une section de l'ouverture de canal (44) transversale à la direction d'écoulement (6, 12) est ronde ou ovale.

7. Dispositif selon la revendication 1,
**caractérisé en ce que**
le canal (43) comporte deux segments (49, 50),
le premier segment (49) a un angle de coupe d'environ 25° et le second segment (50) a un angle de coupe d'environ 35° par rapport à la direction principale d'écoulement (6, 12).

8. Dispositif selon les revendications précédentes,
**caractérisé en ce qu'**
un corps tubulaire (8) traversé par le milieu dans la direction principale d'écoulement (6) est situé dans la conduite (2), ce corps tubulaire ayant un canal de passage (11), et
l'élément de mesure (23) est logé dans le corps tubulaire (8).
